# DEMANDE DE BREVET EUROPEEN

(11) **EP 3 926 014 A1**
(43) Date de publication de la demande: **22.12.2021**
(21) Numéro de dépôt: 20181169.2
(22) Date de dépôt: 19.06.2020
(51) Int. Cl.: C09D 5/02, C09D 7/40, C09D 133/00, E04C 2/00

(54) **COMPOSITION DE REVÊTEMENT THERMIQUEMENT ISOLANT - SURFACE REVÊTUE ASSOCIÉE**

(71) Demandeur: Theolaur Peintures, 59139 Noyelles-les-Seclin (FR)
(72) Inventeur: JOYEUX, Caherine, 59139 NOYELLES-LES-SECLIN (FR)
(74) Mandataire: Ipside

(57) **Abrégé**

La présente invention concerne une composition pour revêtement de surface comprenant des particules polymériques creuses, un solvant qui contient majoritairement de l'eau. De manière caractéristique, selon l'invention, elle contient également au moins un pigment froid différent du dioxyde de titane.

La présente invention concerne également une surface recouverte d'un revêtement obtenu à partir de la composition de l'invention.

## Description

### DOMAINE TECHNIQUE

La présente invention concerne une composition de revêtement thermiquement isolant et une surface recouverte d'un revêtement obtenu par séchage de cette composition.

### ART ANTERIEUR

Le document CN 106752686 A1 décrit une composition pour un revêtement mural extérieur qui permet d'isoler thermiquement un bâtiment. La composition décrite dans ce document comprend de 40 à 60 parts en masse d'une résine époxy, 5-12 parts en masse de perlite, 3-8 parts en masse de particules de céramique, 6-10 parts en masse de liège ou de kapok, 8-12 parts de fibres de charbon de bois de bambou, 1-5 parts en masse de dioxyde de titane, 2-5 parts en masse de pigment, 1-3 parts en masse d'éthylène glycol, 1-4 parts en masse d'un épaississant, 2-3 parts d'agent antimousse, 1-6 parts en masse d'agent aidant à la formation d'un film et 14 à 18 parts en masse d'eau déionisée. Cette composition est appliquée sur la surface du mur extérieur d'un bâtiment et permet de former sur ce mur, un film isolant du froid. Le caractère isolant du mur vient de sa faible conductivité thermique conférée par le liège, le kapok, les fibres de charbon de bois de bambou, les particules de céramiques et de dioxyde de titane. Ce document fait explicitement référence au transfert de chaleur depuis l'intérieur du bâtiment vers l'extérieur de ce dernier en indiquant que le revêtement isole du froid extérieur.

Le document WO 2011/134908 A1 décrit une composition aqueuse de revêtement comprenant des pigments opacifiants choisis parmi le dioxyde de titane (3% à 10% en volume « pigment volume content ») et les mélanges de dioxyde de titane avec des particules polymériques creuses (de 0% à 20% de particules en volume) et des particules choisies parmi les particules de carbonate de calcium, les particules de carbonate de magnésium, les particules de kaolin et les particules de syénite à néphéline en tant que charge. Cette composition permet d'avoir un revêtement opaque sans trop utiliser de dioxyde de titane.

### PROBLEMES TECHNIQUES

Un but de la présente invention est de proposer une composition de revêtement, en particulier une composition de peinture qui permet d'obtenir un revêtement opaque et thermiquement isolant et en particulier, un revêtement qui protège de la chaleur extérieure.

Un deuxième but de l'invention est de proposer une composition telle que précitée qui soit adaptée à une application sur des bardages et/ou du métal voire sur des bardages métalliques.

Un autre but de la présente invention est de proposer une composition de revêtement/revêtement, en particulier une composition de peinture qui permet d'obtenir un revêtement opaque et thermiquement isolant et qui soit déclinable en plusieurs teintes.

Un autre but de la présente invention est de proposer une composition telle que précitée qui permet, par polymérisation, de former un revêtement présentant un taux de réflexion solaire totale d'au moins 30% et qui puisse résister à un usage en extérieur.

Un autre but de la présente invention est de proposer une composition telle que précitée qui permet, par polymérisation, de former un revêtement capable d'encapsuler l'amiante.

### BREVE DESCRIPTION DE L'INVENTION

La présente invention concerne une composition pour revêtement de surface comprenant des particules polymériques creuses et un solvant qui contient majoritairement de l'eau. De manière caractéristique, elle contient également au moins un pigment froid différent du dioxyde de titane.

La composition de l'invention peut comprendre du dioxyde de titane mais dans ce cas, elle comprend également au moins un autre pigment froid qui n'est pas le dioxyde de titane.

De préférence, la composition de l'invention est polymérisable et permet d'obtenir le revêtement par application et polymérisation. Il s'agit alors d'une peinture.

La Demanderesse a en effet constaté que la combinaison d'un pigment froid et de particules polymériques creuses permettait de réfléchir la lumière du soleil, non seulement la lumière visible mais également les infra-rouges, en particulier les infra-rouges proches. Le pigment froid notamment réfléchit les infra-rouges tandis que les particules polymériques creuses réfléchissent au moins la lumière visible et diminuent la conductivité thermique du revêtement obtenu par polymérisation de la composition de l'invention. L'isolation du revêtement thermique de l'invention est donc obtenue par réfléchissement des rayons lumineux visibles, réfléchissement des infra-rouges proches et par la diminution de la conductivité thermique procurée en particulier par les particules polymériques creuses.

### DESCRIPTION DETAILLEE

Le pigment froid est de préférence choisi parmi les pigments jaunes, oranges, bleus, verts, rouges, bruns, noirs, violets et les mélanges d'au moins deux de ces pigments tels que référencés dans le Color Index.

Le pigment froid peut être choisi, par exemple parmi les oxydes de fer jaunes (référence Color Index PY42), les oxydes de nickel, titane, antimoine (PY53), le vanadate de bismuth (PY184), les oxydes d'étain, titane, zinc, antimoine (PY216), les oxydes de fer rouge synthétique (PR101), la dibromo-anthanthrone (PR168), les aluminosilicates de sodium soufré (PV15), les oxydes de chrome non hydraté (PG17), les oxydes de cobalt et titane (PG50), les oxydes de chrome, fer et notamment de fer hématite (PBr29), les aluminates de cobalt (PB28), les oxydes noirs de fer, manganèse (PBk33), les pérylènes notamment les pérylènes rouges sombres (PR179, PR189, PR190, PR224, PV29) et noirs (PBk31 et PBk32, PBk 33) et les oxydes de fer noirs (PBk11) et les mélanges d'au moins deux de ces pigments.

De préférence, la composition de l'invention est exempte de noir de carbone (BPk7).

Le pigment est de préférence choisi parmi les pigments noirs, bleus, verts, bruns et violets et les mélanges d'au moins deux de ces pigments. Ces pigments sont choisis parmi les pigments précités définis selon leur nature chimique. Ces couleurs, quand elles sont foncées en particulier, absorbent les rayonnements visibles ce qui provoque un échauffement du revêtement, pouvant conduire à l'altération physique et/ou chimique de ce dernier. Cette détérioration du revêtement est visible sous la forme de cloques et/ou d'un ramollissement du revêtement.

De préférence, le pigment présente un taux de réflexion totale solaire (TSR) supérieur ou égal à 20%, de préférence supérieur ou égal à 30% et plus particulièrement égal à 33% (mesuré selon la norme ASTMG 159-98 avec une valeur ajuste de L à 1/3).

De préférence, le pigment froid est choisi parmi les pigments suivants PBk32, PBk11, PBk33, PG17, PBr29 et les mélanges d'au moins deux de ces pigments. Ces pigments permettent d'obtenir des couleurs qui peuvent être utilisées pour de multiples applications (revêtement de bardage extérieur de mur, de toit, palissade, porte de jardin...).

De préférence, la composition selon l'invention, contient en outre des particules de dioxyde de titane et notamment des particules de rutile. Ces particules permettent également de réfléchir le spectre visible, les UV et les infra-rouges proches. Elle assure également la fonction d'opacifiant de la composition en combinaison avec les particules polymériques creuses.

Avantageusement, la composition contient des particules de rutile qui sont des particules présentant un cœur en dioxyde de titane recouvert d'oxydes de fer.

De préférence, lesdites particules polymériques creuses sont choisies parmi les particules polymériques creuses, en particulier des particules polymériques creuses choisies parmi les particules de latex creuses, les microsphères polymériques creuses et les mélanges de ces deux types de particules.

Selon un mode de réalisation particulier, lesdites particules et en particulier les microsphères polymériques quand ladite composition comporte des microsphères présentent un diamètre moyen sensiblement égal ou supérieur à 20µm et sensiblement égal ou inférieur à 55µm et notamment sensiblement égal ou supérieur à 30µm et sensiblement égal ou inférieur à 50µm.

Le diamètre moyen des particules de latex (sphériques ou non) est par exemple sensiblement égal ou supérieur à 20µm et sensiblement égal ou inférieur à 40µm. Il est par exemple, sensiblement égal à 35µm.

Dans la présente demande, le diamètre moyen correspond à la valeur médiane des tailles de particules pour laquelle 50% des particules de l'échantillon sont plus petites ou plus grandes que cette valeur médiane.

La taille des microsphères polymériques correspond à la taille des particules non expansées (c'est-à-dire sans dilation du fait du gaz qu'elles contiennent).

La méthode utilisée pour la mesure du diamètre moyen des microsphères polymériques met en œuvre la diffraction d'un rayon laser (« Low Angle Laser Light Scattering (LALLS). Les microsphères peuvent être dispersées dans de l'eau distillée ou mesurées sous forme de poudre. L'instrument de mesure utilisé est un diffractomètre Malvern Mastersizer 2000

Les diamètres moyens des particules de latex peuvent être mesurés selon toute méthode connue adaptée et en particulier par la même méthode que celle utilisée pour les particules d'aluminosilicate(s).

De telles particules sont invisibles à l'œil nu et ne gênent pas l'application de la peinture même en pulvérisation. Le rendu est ainsi parfait.

Selon un mode de réalisation préféré des microsphères polymériques, elles comportent une coque comprenant ou constituée d'un copolymère d'acrylonitrile de chlorure de vinylidène et d'acrylate de méthyle, ladite coque renfermant éventuellement un gaz. Le gaz peut être de l'isobutane, par exemple. De telles microsphères sont vendues sous l'appellation commerciale EXPANCEL^{®}. Ainsi, il est possible selon l'invention, par exemple, de choisir des microsphères commercialisées sous les noms commerciaux suivants et éventuellement de les mélanger : EXPANCEL 461 WE/DE 20 d36 ; 461 WE/DE 40 d36, 920 WE/DE 40 d24, 921 WE/DE 40 d24, 461 DE 20 d70, 461 DET 40d25 920 DET 4025 920 DET 80d25. WE signifie que le produit se présente sous la forme d'une suspension aqueuse contenant 15% en masse de microsphères et DE ou DET signifie que les microsphères sont sous la forme de poudre sèche. Les deux formes sont commercialisées.

La Demanderesse a mis en évidence que de telles particules polymériques ont la particularité de réfléchir la lumière visible et également les infra-rouges proches. Elles viennent donc compléter l'action du pigment froid tout en procurant une isolation du fait de leur faible conductivité thermique.

Avantageusement, lesdites particules polymériques creuses reflètent les infra-rouges proches et présentent un taux de réflexion totale solaire supérieur ou égal à 83%, en particulier supérieur ou égal à 85% et notamment égal à 87%, mesuré selon la norme DIN.EN 410.

Avantageusement, la composition de l'invention peut comprendre également en outre, au moins un additif choisi parmi les agents rhéologiques, les agents antimousses, les biocides, les agents mouillants/dispersants, les inhibiteurs de corrosion, les correcteurs de pH, les particules d'aluminosilicate(s) et les pâtes pigmentaires.

Selon un mode de réalisation particulier, la composition de l'invention contient au moins 1% en masse de pigment(s) froid(s). Ce pourcentage permet d'obtenir un réel effet isolant.

Avantageusement, la composition de l'invention peut présenter une densité inférieure à 1 et notamment égale ou inférieure à 0,86 et égale ou supérieure à 0,80. Cette densité faible permet de réduire la pénibilité d'application et de transport de la composition. Elle rend également son application moins laborieuse, notamment à la brosse ou au pistolet.

Lorsque la composition est polymérisable et correspond donc à une composition pour peinture, elle comprend un liant polymérisable qui est avantageusement un liant acrylique ou un mélange de liants acryliques et en particulier les mélanges de liants acryliques contenant un liant acrylique adapté au métal. De tels liants permettent d'obtenir un revêtement résistant au poinçonnement mais qui est assez souple pour accompagner la dilatation du support revêtu, en particulier quand ce support est métallique ou composé de lames tel que du bardage. Un tel liant est particulièrement adapté pour recouvrir du bardage métallique.

Avantageusement, le rapport massique (particules polymériques creuses)/pigment froid ou quand la composition contient des particules de dioxyde de titane, le rapport massique (particules polymériques creuses + dioxyde de titane)/pigment froid est supérieur ou égal à 1. On obtient ainsi une composition qui permet de former un revêtement dont le taux de réflexion totale solaire est supérieur ou égal à 30% (Norme ASTM G173 ou E903).

La présente invention concerne également une surface et en particulier une surface formée par une pluralité de lames jointes du type bardage, en particulier des lames métalliques, qui est recouverte par un film obtenu par séchage de la composition selon l'invention. Le séchage peut engendrer la polymérisation et engendre la polymérisation quand la composition de l'invention est polymérisable.

La surface peut former au moins partiellement le toit d'un bâtiment ou le mur extérieur ou intérieur d'un bâtiment.

Avantageusement, la surface selon l'invention présente un taux de réflexion solaire totale supérieur ou égal à 30% (selon la norme ASTM G173 ou la norme E903). Le taux de réflexion totale solaire de la surface revêtue peut avantageusement être inférieur ou égal à 50% ce qui permet d'obtenir des couleurs sombres et denses sans échauffement du revêtement et tout en procurant une isolation comme précédemment expliqué.

### DEFINITIONS

Les infra-rouges proches correspondent aux rayonnements ayant des longueurs d'ondes allant de 700nm (700nm compris) à 2500 nm (2500 nm compris).

Un pigment froid est défini comme étant un pigment d'une couleur donnée qui dans une composition donnée va procurer à cette dernière un taux de réflexion des infrarouges supérieur à celui d'une composition de référence formée des mêmes composants que la composition donnée qui contient le pigment froid mais qui contient en lieu et place de ce pigment un pigment de référence. La composition contenant le pigment froid et la composition de référence ont la même teinte c'est-à-dire qu'elles présentent le même spectre de réflexion de la lumière visible.

### FIGURES

La Fig. 1 représente une vue schématique d'un dispositif permettant de mesurer le taux de réflexion totale solaire ;
La Fig. 2 représente la valeur de R_{dh} en fonction de la longueur d'onde pour les revêtements obtenus à partir de la composition A et de la composition B ;
La Fig. 3 représente la variation de la température (en °C) dans une enceinte dont une paroi externe est recouverte d'un revêtement obtenu à partir de la composition selon l'exemple 3, en fonction du temps (en min), après arrêt du chauffage ;
La Fig. 4 représente la variation de la température (en °C) dans une enceinte dont une paroi externe est recouverte d'un revêtement obtenu à partir de la composition selon l'exemple 4, en fonction du temps (en min), après arrêt du chauffage ;
La Fig. 5 représente la variation de la température (en °C) dans une enceinte dont une paroi externe est recouverte d'un revêtement obtenu à partir de la composition selon l'exemple 1, en fonction du temps (en min) , après arrêt du chauffage ;
La Fig. 6 représente la variation de la température (en °C) dans une enceinte dont une paroi externe est recouverte d'un revêtement obtenu à partir de la composition selon l'exemple 2, en fonction du temps (en min), après arrêt du chauffage ;

### EXEMPLES EXPERIMENTAUX

### A) Compositions permettant d'obtenir un revêtement ayant une teinte pastelle

### Exemple 1 : teinte F077B

La composition de l'exemple 1 est reproduite dans le tableau 1 ci-dessous.

**Tableau 1**

| Fonction | nature chimique | % massique |
|---|---|---|
| SOLVANT | EAU | 4,311 |
| BIOCIDE | COMBINAISON ALGICIDE FONGICIDE | 0,216 |
| AGENT RHEOLOGIQUE | SOLUTION D'UREE MODIFIEE | 0,086 |
| AGENT RHEOLOGIQUE | COPOLYMERE ACRILYQUE CARBOXYLE | 0,172 |
| AGENT RHEOLOGIQUE | POLYMERE NON IONIQUE HYDROPHOBE MODIFIE | 0,539 |
| MOUILLANT / DISPERSANT | PIGMENT CARBOXYLATE DISPERSANT | 0,690 |
| MOUILLANT / DISPERSANT | ANIONIC SURFACE ACTIVE | 0,259 |
| BIOCIDE | chloromethyl-, methyl- and benz-isothiazolinones | 0,140 |
| AGENT ANTIMOUSSE | EMULSION D' UN COPOLYMERE POLYETHERSILOXANE | 0,259 |
| AGENT ANTI-FLASH RUST | Préparation aqueuse à base de sels d'acides organiques | 0,345 |
| RESINE | POLYMERE ACRYLIQUE | 37,508 |
| AGENT ANTICORROSION | AMINE EN SOLUTION DANS L'ETHER METHYLIQUE | 1,725 |
| CHARGE | Particules polymériques creuses EXPANCEL | 7,760 |
| PIGMENT | DIOXYDE DE TITANE | 17,245 |
| AGENT RHEOLOGIQUE | POLYESTER MODIFIE EN SOLUTION AQUEUSE | 1,293 |
| SOLVANT | MONOPROPYLENE GLYCOL | 1,725 |
| SOLVANT | MELANGE DE DI ESTER | 0,862 |
| RESINE | POLYMERE ACRYLIQUE | 12,503 |
| SOLVANT | SOLUTION D'HYDROCARBURE | 0,862 |
| AGENT RHEOLOGIQUE | COPOLYMERE ACRILYQUE | 0,172 |
| PIGMENT | PB 15:3 | 2,307 |
| PIGMENT FROID | PBr29 | 4,822 |
| PIGMENT | PBk7 | 0,000 |
| PIGMENT | PV 23 | 4,199 |
| TOTAL | | 100,000 |

### Exemple 2 :Teinte F093B

La composition de l'exemple 2 est reproduite dans le tableau 2 ci-dessous.

**Tableau 2**

| Fonction | Nature chimique | % massique |
|---|---|---|
| SOLVANT | EAU | 4,251 |
| BIOCIDE | COMBINAISON ALGICIDE FONGICIDE | 0,213 |
| AGENT RHEOLOGIQUE | SOLUTION D'UREE MODIFIEE | 0,085 |
| AGENT RHEOLOGIQUE | COPOLYMERE ACRILYQUE CARBOXYLE | 0,170 |
| AGENT RHEOLOGIQUE | POLYMERE NON IONIQUE HYDROPHOBE MODIFIE | 0,531 |
| MOUILLANT / DISPERSANT | PIGMENT CARBOXYLATE DISPERSANT | 0,680 |
| MOUILLANT / DISPERSANT | ANIONIC SURFACE ACTIVE | 0,255 |
| BIOCIDE | chloromethyl-, methyl- and benz-isothiazolinones | 0,138 |
| AGENT ANTIMOUSSE | EMULSION D' UN COPOLYMERE POLYETHERSILOXANE | 0,255 |
| AGENT ANTI-FLASH RUST | Préparation aqueuse à base de sels d'acides organiques | 0,340 |
| RESINE | POLYMERE ACRYLIQUE | 36,984 |
| AGENT ANTICORROSION | AMINE EN SOLUTION DANS L'ETHER METHYLIQUE | 1,700 |
| CHARGE | EXPANCEL | 7,652 |
| PIGMENT | DIOXYDE DE TITANE | 17,004 |
| AGENT | POLYESTER MODIFIE EN SOLUTION | 1,275 |
| RHEOLOGIQUE | AQUEUSE | |
| SOLVANT | MONOPROPYLENE GLYCOL | 1,700 |
| SOLVANT | MELANGE DE DI ESTER | 0,850 |
| RESINE | POLYMERE ACRYLIQUE | 12,328 |
| SOLVANT | SOLUTION D'HYDROCARBURE | 0,850 |
| AGENT RHEOLOGIQUE | COPOLYMERE ACRILYQUE | 0,170 |
| PIGMENT FROID | PBr29 | 3,762 |
| PIGMENT | PBk7 | 0,000 |
| PIGMENT | PY 128 | 8,742 |
| PIGMENT | PG 7 | 0,062 |
| TOTAL | | 100,000 |

### B) Exemple de compositions contenant peu de dioxyde de titane

### Exemple 3 : composition formant un revêtement de teinte brun normand

La composition de l'exemple 3 est reproduite dans le tableau 3 ci-dessous.

**Tableau 3**

| **Fonction** | **Nature chimique** | % massique |
|---|---|---|
| SOLVANT | EAU | 5,022 |
| BIOCIDE | COMBINAISON ALGICIDE FONGICIDE | 0,223 |
| AGENT RHEOLOGIQUE | SOLUTION D'UREE MODIFIEE | 0,251 |
| AGENT RHEOLOGIQUE | COPOLYMERE ACRILYQUE CARBOXYLE | 0,335 |
| AGENT RHEOLOGIQUE | POLYMERE NON IONIQUE HYDROPHOBE MODIFIE | 0,976 |
| MOUILLANT / DISPERSANT | PIGMENT CARBOXYLATE DISPERSANT | 0,670 |
| MOUILLANT / DISPERSANT | ANIONIC SURFACE ACTIVE | 0,251 |
| BIOCIDE | chloromethyl-, methyl- and benz-isothiazolinones | 0,126 |
| AGENT ANTIMOUSSE | EMULSION D' UN COPOLYMERE POLYETHERSILOXANE | 0,335 |
| AGENT ANTI-FLASH RUST | Préparation aqueuse à base de sels d'acides organiques | 0,335 |
| RESINE | POLYMERE ACRYLIQUE | 45,196 |
| AGENT ANTICORROSION | AMINE EN SOLUTION DANS L'ETHER METHYLIQUE | 1,339 |
| CHARGE | EXPANCEL | 4,603 |
| CHARGE | CARBONATE | 3,348 |
| AGENT RHEOLOGIQUE | POLYESTER MODIFIE EN SOLUTION AQUEUSE | 1,255 |
| SOLVANT | MONOPROPYLENE GLYCOL | 1,674 |
| SOLVANT | MELANGE DE DI ESTER | 0,670 |
| RESINE | POLYMERE ACRYLIQUE | 16,739 |
| SOLVANT | SOLUTION D'HYDROCARBURE | 0,837 |
| AGENT RHEOLOGIQUE | COPOLYMERE ACRILYQUE | 0,167 |
| PIGMENT | oxyde de titane | 3,493 |
| PIGMENT FROID | PBr29 | 8,833 |
| PIGMENT | PY 128 | 2,198 |
| PIGMENT | PBk7 | 0,000 |
| PIGMENT | PR 101 | 0,000 |
| PIGMENT | PR 254 | 1,124 |
| TOTAL | | 100,000 |

### Exemple 4 : composition formant un revêtement de teinte brique

**Tableau 4**

| Fonction | Nature chimique | % massique |
|---|---|---|
| SOLVANT | EAU | 5,218 |
| BIOCIDE | COMBINAISON ALGICIDE FONGICIDE | 0,232 |
| AGENT RHEOLOGIQUE | SOLUTION D'UREE MODIFIEE | 0,261 |
| AGENT RHEOLOGIQUE | COPOLYMERE ACRILYQUE CARBOXYLE | 0,348 |
| AGENT RHEOLOGIQUE | POLYMERE NON IONIQUE HYDROPHOBE MODIFIE | 1,015 |
| MOUILLANT / DISPERSANT | PIGMENT CARBOXYLATE DISPERSANT | 0,696 |
| MOUILLANT / DISPERSANT | ANIONIC SURFACE ACTIVE | 0,261 |
| BIOCIDE | chloromethyl-, methyl- and benz-isothiazolinones | 0,130 |
| AGENT ANTIMOUSSE | EMULSION D' UN COPOLYMERE POLYETHERSILOXANE | 0,348 |
| AGENT ANTI-FLASH RUST | Préparation aqueuse à base de sels d'acides organiques | 0,348 |
| RESINE | POLYMERE ACRYLIQUE | 46,963 |
| AGENT ANTICORROSION | AMINE EN SOLUTION DANS L'ETHER METHYLIQUE | 1,391 |
| CHARGE | EXPANCEL | 4,783 |
| CHARGE | CARBONATE | 3,479 |
| AGENT RHEOLOGIQUE | POLYESTER MODIFIE EN SOLUTION AQUEUSE | 1,305 |
| SOLVANT | MONOPROPYLENE GLYCOL | 1,739 |
| SOLVANT | MELANGE DE DI ESTER | 0,696 |
| RESINE | POLYMERE ACRYLIQUE | 17,394 |
| SOLVANT | SOLUTION D'HYDROCARBURE | 0,870 |
| AGENT RHEOLOGIQUE | COPOLYMERE ACRILYQUE | 0,174 |
| PIGMENT | Oxyde de titane | 4,959 |
| PIGMENT FROID | PBr29 | 1,025 |
| PIGMENT | PR 101 | 4,522 |
| PIGMENT | PV 23 | 1,483 |
| PIGMENT | PR 254 | 0,362 |
| PIGMENT | PBk 7 | 0,000 |
| TOTAL | | 100,000 |

### C) Exemples de compositions permettant d'obtenir des teintes foncées

### Exemple 5 : teinte F096B

| Fonction | Nature chimique | % massique |
|---|---|---|
| SOLVANT | EAU | 4,508 |
| BIOCIDE | COMBINAISON ALGICIDE FONGICIDE | 0,677 |
| AGENT RHEOLOGIQUE | SOLUTION D'UREE MODIFIEE | 0,180 |
| AGENT RHEOLOGIQUE | COPOLYMERE ACRILYQUE CARBOXYLE | 0,180 |
| AGENT RHEOLOGIQUE | POLYMERE NON IONIQUE HYDROPHOBE MODIFIE | 0,586 |
| MOUILLANT / DISPERSANT | PIGMENT CARBOXYLATE DISPERSANT | 0,721 |
| MOUILLANT / DISPERSANT | ANIONIC SURFACE ACTIVE | 0,361 |
| AGENT ANTIMOUSSE | EMULSION D' UN COPOLYMERE POLYETHERSILOXANE | 0,271 |
| AGENT ANTI-FLASH RUST | Préparation aqueuse à base de sels d'acides organiques | 0,361 |
| RESINE | POLYMERE ACRYLIQUE | 44,183 |
| AGENT ANTICORROSION | AMINE EN SOLUTION DANS L'ETHER METHYLIQUE | 1,803 |
| CHARGE | EXPANCEL | 6,763 |
| PIGMENT | DIOXYDE DE TITANE | 5,410 |
| AGENT RHEOLOGIQUE | POLYESTER MODIFIE EN SOLUTION AQUEUSE | 1,353 |
| CHARGE | CARBONATE | 4,508 |
| SOLVANT | MONOPROPYLENE GLYCOL | 1,803 |
| SOLVANT | MELANGE DE DI ESTER | 0,902 |
| RESINE | POLYMERE ACRYLIQUE | 15,329 |
| SOLVANT | SOLUTION D'HYDROCARBURE | 0,902 |
| AGENT RHEOLOGIQUE | COPOLYMERE ACRILYQUE | 0,180 |
| PIGMENT | PY 42 | 4,386 |
| PIGMENT FROID | PBr29 | 4,278 |
| PIGMENT | PBk7 | 0,000 |
| PIGMENT | PR 101 | 0,353 |
| TOTAL | | 100,000 |

### Exemple 6 : teinte F095B

**Tableau 6**

| Fonction | Nature chimique | % massique |
|---|---|---|
| SOLVANT | EAU | 4,366 |
| BIOCIDE | COMBINAISON ALGICIDE FONGICIDE | 0,656 |
| AGENT RHEOLOGIQUE | SOLUTION D'UREE MODIFIEE | 0,175 |
| AGENT RHEOLOGIQUE | COPOLYMERE ACRILYQUE CARBOXYLE | 0,175 |
| AGENT RHEOLOGIQUE | POLYMERE NON IONIQUE HYDROPHOBE MODIFIE | 0,568 |
| MOUILLANT / DISPERSANT | PIGMENT CARBOXYLATE DISPERSANT | 0,699 |
| MOUILLANT / DISPERSANT | ANIONIC SURFACE ACTIVE | 0,349 |
| AGENT ANTIMOUSSE | EMULSION D' UN COPOLYMERE POLYETHERSILOXANE | 0,262 |
| AGENT ANTI-FLASH RUST | Préparation aqueuse à base de sels d'acides organiques | 0,349 |
| RESINE | POLYMERE ACRYLIQUE | 42,789 |
| AGENT ANTICORROSION | AMINE EN SOLUTION DANS L'ETHER METHYLIQUE | 1,746 |
| CHARGE | EXPANCEL | 6,549 |
| PIGMENT | DIOXYDE DE TITANE | 5,239 |
| AGENT RHEOLOGIQUE | POLYESTER MODIFIE EN SOLUTION AQUEUSE | 1,310 |
| CHARGE | CARBONATE | 4,366 |
| SOLVANT | MONOPROPYLENE GLYCOL | 1,746 |
| SOLVANT | MELANGE DE DI ESTER | 0,873 |
| RESINE | POLYMERE ACRYLIQUE | 14,845 |
| SOLVANT | SOLUTION D'HYDROCARBURE | 0,873 |
| AGENT RHEOLOGIQUE | COPOLYMERE ACRILYQUE | 0,175 |
| PIGMENT | PY 74 | 3,763 |
| PIGMENT | PY 42 | 0,000 |
| PIGMENT FROID | PBr29 | 7,564 |
| PIGMENT | PBk7 | 0,000 |
| PIGMENT | PR 101 | 0,562 |
| TOTAL | | 100,000 |

### TESTS

### 1) Détermination de l'influence des particules polymériques creuses sur la réflexion solaire totale du revêtement (norme DIN.EN 410)

Une composition A contenant la charge de particules polymériques creuses dans une base donnée a été élaborée. Une composition B correspondant à la base de la composition A a également été élaborée. On a ensuite mesuré et comparé la réflexion totale solaire des deux revêtements obtenus après polymérisation des deux compositions.

Les particules polymériques creuses sont des particules de type Expancel^{®} précitées.

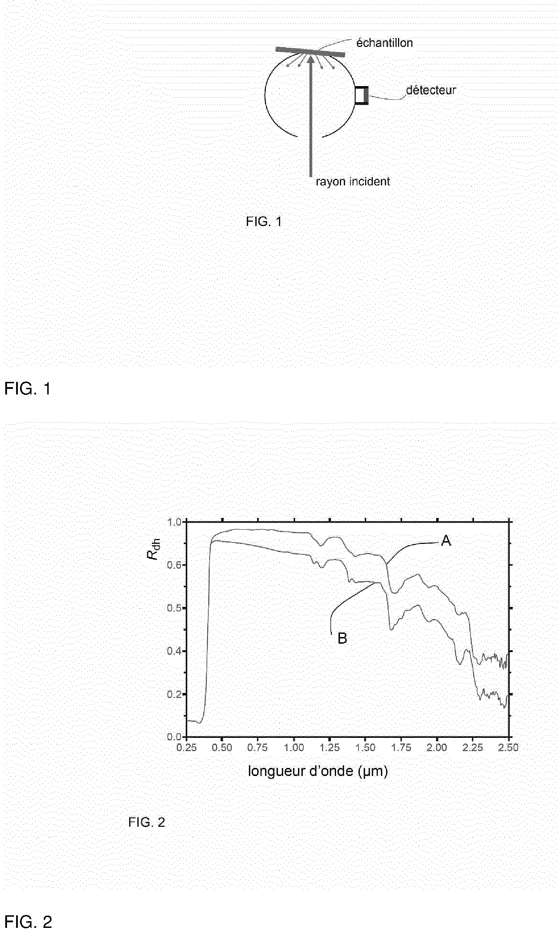

La mesure de la réflectance spectrale directionnelle-hémisphérique R_{dh} a été effectuée à température ambiante au moyen d'une sphère d'intégration comme représenté sur la Fig. 1. L'intérieur de la sphère est revêtu d'un matériau de réflectance proche de 1. L'échantillon est irradié perpendiculairement à sa surface et l'on détecte la radiation réfléchie dans l'hémisphère, comme représenté sur la Fig. 1. La mesure a été réalisée aux longueurs d'ondes allant de 250nm à 2500nm à l'aide d'un réfractomètre Lambda 950 commercialisé par Elmer Perkin. La réflexion totale solaire est calculée par intégration de R_{dh} sur toutes les longueurs d'ondes du spectre de la lumière solaire. La Fig. 2 représente les variations de R_{dh} de chacune des compositions A et B en fonction de la longueur d'onde. Sur la Fig. 2 on constate que la valeur de R_{dh} est toujours supérieure pour le revêtement obtenu avec la composition A à la valeur correspondant au revêtement obtenu avec la composition B, quelle que soit la longueur d'onde. Il s'ensuit que le taux de réflexion totale solaire du revêtement obtenu avec la composition A est de 0,87 % ±0,02 alors qu'il n'est que de 0,80 % ±0,02 pour le revêtement obtenu avec la composition B. On en déduit que, de manière surprenante, les particules polymériques creuses permettent également de réfléchir la lumière dans les longueurs d'ondes du visible, de l'U.V et des infra-rouges proches.

### 2) Détermination de l'isolation thermique conférée par le revêtement de l'invention

On place une sonde thermique dans une enceinte fermée. Une des parois de cette enceinte comporte une face extérieure revêtue d'un film d'épaisseur donnée obtenu par application d'une composition à tester. On place face à cette paroi revêtue, une source émettant des rayons infra-rouges proches et l'on mesure la diminution de la température dans l'enceinte en fonction du temps après l'arrêt du chauffage. On mesure également la température dans l'enceinte au moment de l'arrêt du chauffage.

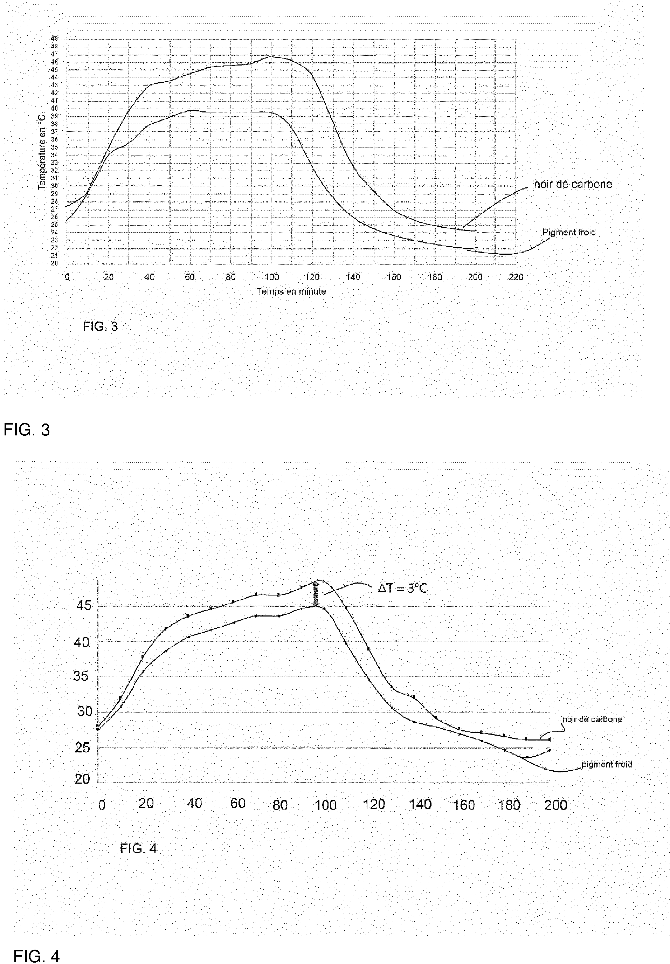

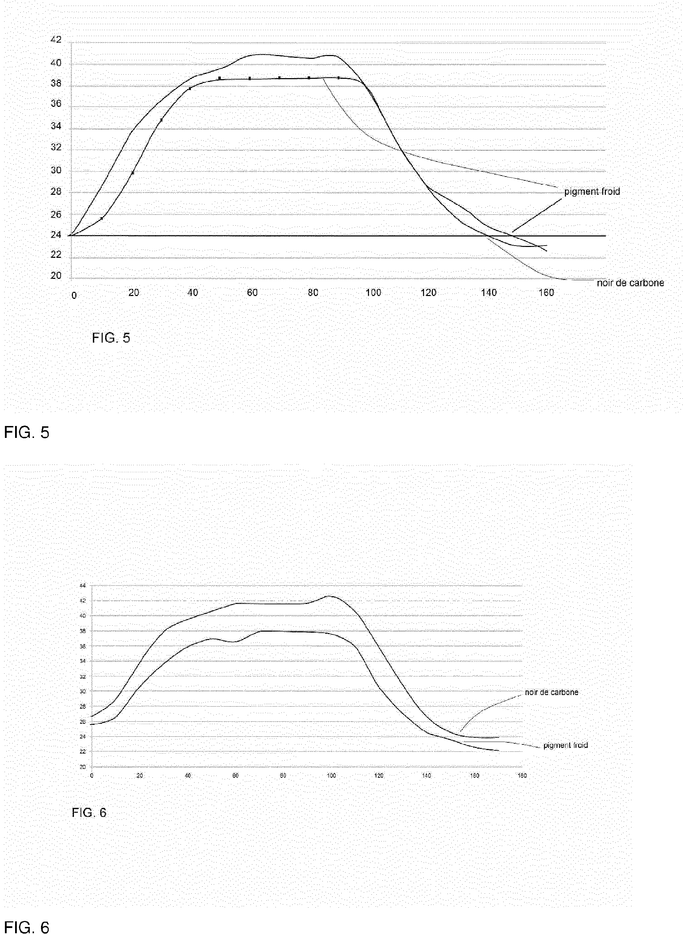

Les résultats obtenus pour la composition 3 sont représenté sur la Fig. 3. Les résultats obtenus pour la composition 4 sont représentés sur la Fig. 4. Les résultats obtenus pour la composition 1 sont représenté sur la Fig. 5. Les résultats obtenus pour la composition 2 sont représentés sur la Fig. 6.

En référence à la Fig. 3, on constate qu'à l'arrêt du chauffage, la température dans l'enceinte est plus élevée pour la composition contenant du noir de carbone (PBk7) ce qui indique que la composition de l'invention a davantage réfléchi les infra-rouges provenant de la source d'infra-rouges. Par ailleurs, la comparaison des coefficients directeurs des régressions linéaires après l'arrêt du chauffage (au niveau de la brusque chute de température) montre que la diminution de température est plus importante pour la composition ne contenant pas le pigment froid (-0.436 vs -0.22 soit presque 50% plus vite). On constate donc que le revêtement obtenu avec la composition de l'invention permet de conserver la chaleur dans l'enceinte et qu'elle est donc isolante en référence au transfert de chaleur par conduction. Cette conductivité faible est probablement due au moins en partie aux particules polymérique creuses qui sont thermiquement isolantes. La différence de température maximale entre les deux revêtements est de 7°C.

En référence à la Fig. 4, on constate les mêmes résultats pour le revêtement obtenu avec la composition 4. On obtient une différence de température maximale de 3°C indiquant que le revêtement de l'invention réfléchit bien le rayonnement visible, UV et infrarouge proche. La comparaison des coefficients directeurs des régressions linéaires après l'arrêt du chauffage montre que la diminution de température est plus importante avec du noir de carbone (-0.36 vs -0.29 soit presque 20% plus vite).

Les compositions 3 et 4 ont des teintes sombres qui normalement absorbent beaucoup la lumière du soleil. L'ajout de particules polymériques creuses et de pigment froid permet de réduire l'absorption lumineuse du revêtement dans tout le spectre et en particulier dans les infra-rouges proches ce qui permet d'isoler de la chaleur générée par rayonnement l'espace entouré du revêtement de l'invention.

En référence à la Fig. 5, on constate les mêmes résultats pour le revêtement obtenu avec la composition 4. On obtient une différence de température maximale de 2°C indiquant que le revêtement de l'invention réfléchit bien le rayonnement visible, UV et infrarouge proche.

En référence à la Fig. 6, on constate les mêmes résultats pour le revêtement obtenu avec la composition 4. On obtient une différence de température maximale de 5°C indiquant que le revêtement de l'invention réfléchit bien le rayonnement visible, UV et infrarouge proche. La comparaison des coefficients directeurs des régressions linéaires après l'arrêt du chauffage montre que la diminution de température est plus importante avec du noir de carbone (-0.47 vs -0.374 soit presque 20% plus vite).

On constate donc que les mêmes effets d'isolation thermique sont obtenus pour les teintes pastelles.

### 3) Mesure de la réflexion solaire totale (TSR) pour les revêtements obtenus à partir des compositions des exemples 1 à 6

Les compositions 1 et 2 confèrent des teintes pastelles assez claires qui donc reflètent plus la lumière que les teintes conférées par la composition 3. La réflexion solaire totale a été mesurée comme indiqué précédemment. Un échantillon revêtu d'une souche couche blanche ou d'une sous-couche noire a été recouvert de la composition à tester. La mesure est réalisée après séchage du film. Les TSR sont mesurées selon la norme ASTM G173 ou E903
Composition 1 : sous-couche blanche TSR = 41,48%
Composition 2 : sous-couche blanche TSR = 45,37%
Composition 3 : sous-couche blanche TSR = 27% sous-couche noire = 26,37%
Composition 4 : sous-couche blanche TSR = 37,89 % sous couche noire = 35,72%
Composition 5 : sous-couche blanche TSR = 36,05 %
Composition 6 : sous-couche blanche TSR = 32,18 %

On constate donc qu'en dépit de la présence du pigment noir et de la teinte foncée, notamment en référence à la composition 4, 5 et 6, le revêtement présente bien une TSR supérieure à 30% ce qui permet son utilisation en extérieur.

### 4) Test de résistance à la corrosion

Une plaque d'acier galvanisé (HDG) a été revêtue d'une des compositions selon l'invention de manière à obtenir un film d'épaisseur 170µm ±µm. La peinture appliquée est laissée à sécher à température ambiante pendant 12 heures puis elle est mise à sécher pendant une semaine à 45°C. Trois méthodes d'essai sont utilisées :
1 résistance à la corrosion : brouillard salin selon la norme ISO-9227
2 résistance à l'eau : test de condensation selon ISO-6270 (40°C)
3 test de l'adhérence : avant et 24 heures après essai selon la norme ISO-2409.

Les paramètres suivants sont mesurés : la délamination selon la norme ISO 4628-8, le degré de corrosion selon la norme ISO 4628-3, le degré de cloquage selon la norme ISO 4628-2 et l'adhérence (norme ISO 2409).

Chacune des compositions précitées s'est avérée former un film résistant à l'eau et à la corrosion (brouillard salin). Ces compositions peuvent donc être utilisées pour revêtir une surface extérieure, soumise aux intempéries.

### 5) Test d'encapsulation de l'amiante

Un test d'encapsulation de l'amiante a été réalisé sur une plaque de ciment amianté conformément à la norme uni 10686/98 et au décret du ministère de la santé italien du 20.08.1999. Trois types de test sont réalisés en fonction de l'exposition de la plaque. Type A : Exposée à l'extérieur Type B : Exposée à l'intérieur Type C : confinée (test pour les revêtements de confinement)

L'épaisseur moyenne sèche à appliquer pour les encapsulants de Type A doit être de 300 µm aucun point ne doit avoir une épaisseur inférieure à 250 µm. La dernière couche doit être d'une couleur différente et contraster avec les couches inférieures. Pour les encapsulants de Type B l'épaisseur sèche ne doit pas être inférieure à 250 µm, aucun point ne doit avoir une épaisseur inférieure à 200 µm. La dernière couche doit être d'une couleur différente des couches inférieures. Pour l'encapsulation de Type C l'épaisseur moyenne sèche ne doit pas être inférieure à 200 µm en aucun point.

Les compositions précitées ont toutes été considérées comme aptes à encapsuler l'amiante, quelle que soit l'exposition de la plaque. Cette encapsulation est probablement due à la combinaison du liant et des particules polymériques creuses qui forment une barrière étanche une fois le liant polymérisé.

## Revendications

1. Composition pour revêtement de surface comprenant des particules polymériques creuses, un solvant qui contient majoritairement de l'eau, **caractérisée en ce qu'**elle contient également au moins un pigment froid différent du dioxyde de titane.

2. Composition selon la revendication 1, **caractérisée en ce que** ledit pigment froid est choisi parmi les pigments noirs, bleus, verts, bruns et violets et les mélanges d'au moins deux de ces pigments.

3. Composition selon l'une quelconque des revendications précédentes, **caractérisée en ce que** ledit pigment froid présente un taux de réflexion totale solaire supérieur ou égal à 20%, plus particulièrement supérieur à 30% et plus particulièrement égal à 33%.

4. Composition selon l'une quelconque des revendications précédentes, **caractérisée en ce que** ledit pigment froid est choisi parmi les pigments suivants PBk32, PBk11, PBk33, PG17, PBr29 et les mélanges d'au moins deux de ces pigments:

5. Composition selon l'une quelconque des revendications précédentes **caractérisée en ce qu'**elle contient en outre des particules de dioxyde de titane et notamment des particules de rutile.

6. Composition selon l'une quelconque des revendications précédentes, **caractérisée en ce que** lesdites particules polymériques creuses sont choisies parmi les particules polymériques creuses, en particulier des particules polymériques creuses choisies parmi les particules de latex creuses, les microsphères polymériques creuses et les mélanges de ces deux types de particules.

7. Composition selon l'une quelconque des revendications précédentes, **caractérisée en ce qu'**elle contient des microsphères polymériques qui comportent une coque comprenant ou constituée d'un copolymère d'acrylonitrile de chlorure de vinylidène et d'acrylate de méthyle, ladite coque renfermant éventuellement un gaz.

8. Composition selon l'une quelconque des revendications précédentes, **caractérisée en ce que** lesdites particules polymériques creuses reflètent les infra-rouges proches et **en ce qu'**elles présentent un taux de réflexion totale solaire supérieur ou égal à 83%, en particulier supérieur ou égal à 85% et notamment égal à 87%.

9. Composition selon l'une quelconque des revendications précédentes, **caractérisée en ce qu'**elle contient en outre, au moins un additif choisi parmi les agents rhéologiques, les agents antimousses, les biocides, les agents mouillants/dispersants, les inhibiteurs de corrosion, les correcteurs de pH, les particules d'aluminosilicate(s) et les pâtes pigmentaires.

10. Composition selon l'une quelconque des revendications précédentes, **caractérisée en ce qu'**elle contient en masse au moins 1% de pigment(s) froid(s).

11. Composition selon l'une quelconque des revendications précédentes, **caractérisée en ce qu'**elle présente une densité inférieure à 1 et notamment égale ou inférieure à 0,86 et égale ou supérieure à 0,80

12. Composition selon l'une quelconque des revendications précédentes, **caractérisée en ce qu'**elle contient en outre un liant choisi parmi les liants acryliques et les mélanges de liants acryliques et en particulier les mélanges de liants acryliques contenant un liant acrylique adapté au métal.

13. Composition selon l'une quelconque des revendications précédentes, **caractérisée en ce que** le rapport massique (particules polymériques creuses)/pigment froid ou quand la composition contient des particules de dioxyde de titane, le rapport massique (particules polymériques creuses + dioxyde de titane)/pigment froid est supérieur ou égal à 1.

14. Surface et en particulier surface formée par une pluralité de lames jointes du type bardage, en particulier des lames métalliques, **caractérisée en ce qu'**elle est recouverte par un film obtenu par séchage de la composition selon l'une quelconque des revendications 1 à 13.

15. Surface selon la revendication 14, **caractérisée en ce qu'**elle forme au moins partiellement le toit d'un bâtiment ou le mur extérieur ou intérieur d'un bâtiment et/ou **en ce qu'**elle présente un taux de réflexion totale solaire supérieur ou égal à 30%.
